# EUROPEAN PATENT SPECIFICATION

(11) **EP 4 264 989 B1**
(45) Date of publication and mention of the grant of the patent: **25.11.2026**
(21) Application number: 21844852.0
(22) Date of filing: 17.12.2021
(51) Int. Cl.: H04W 12/30, H04W 12/065, H04W 12/61, H04W 12/06, H04W 12/08, H04W 12/082, H04W 4/60

(54) **INTERNET GATEWAY PROVISIONING AND EVALUATION OF EMBEDDED SUBSCRIBER IDENTITY MODULE PRIVILEGES**
INTERNET-GATEWAY-BEREITSTELLUNG UND AUSWERTUNG VON PRIVILEGIEN VON EINGEBETTETEN TEILNEHMERIDENTITÄTSMODULEN
MISE EN SERVICE ET ÉVALUATION PAR PASSERELLE INTERNET DE PRIVILÈGES DE MODULE INCORPORÉ D'IDENTIFICATION D'ABONNÉ

(30) Priority: 21.12.2020 US 202017129210
(43) Date of publication of application: 25.10.2023
(73) Proprietor: Dish Network, L.L.C., Englewood, Colorado 80112 (US)
(72) Inventor: DEV, Abeir, Cheyenne, WY 82009 (US)
(74) Representative: Reddie & Grose LLP
(86) International application number: PCT/US2021/064081
(87) International publication number: WO 2022/140186

(56) References cited:
- US-A1- 2014 051 423
- US-A1- 2018 014 178
- US-A1- 2018 176 768
- US-A1- 2019 037 401
- US-A1- 2019 253 563
- US-A1- 2020 322 884
- US-A1- 2021 112 382

## Description

### BACKGROUND

### Technical Field

The present application is related to an Internet gateway provisioning and evaluating embedded subscriber identity module (eSIM) privileges of a device to give or revoke an ability of the device to communicate over a base station.

### Description of the Related Art

The proliferation of eSIM-enabled devices resulted in the replacement of physical SIM cards and giving subscribers instant connectivity to communication networks. eSIMs permit remote or "over-the-air" provisioning by carriers of communication plan privileges. Further, an eSIM allows a device to have multiple profiles without swapping physical cards or allocating space for multiple cards. The flexibility of remote provisioning gives service providers wide ranging capability in configuring the services offered to their customers and subscribers on various devices of the customers and subscribers.

US2019/253563 describes mechanisms for providing a subscriber entity with a time-bounded network subscription. The method is performed by a mobile network operator entity of the subscriber entity. The method comprises receiving a request for a time-bounded network subscription for the subscriber entity. The time-bounded network subscription is to be limited to a specified time period. The method comprises providing, to a subscription management entity, subscription information of the time-bounded network subscription. The subscription information comprises a parameter indicating that the time-bounded network subscription is to be limited to the specified time period.

US2020/322884 describes a way in which network registrations of Internet-of-Things and like devices may be managed through the exchange of subscriber identity module and public land mobile network information. An exposure function may receive information regarding a device that needs cellular on-boarding, and pass the information to an operator subscription manager, and monitor a registration attempt of the device. The exposure function may process a request to allow transfer of ownership of a device, and such a request may include an expiration time, and an action to be taken upon expiry. The exposure function may also dis-enroll (off-board) devices. A central Equipment Identity Register (EIR) may store information relating to the home networks of devices, along with eSIM operating profiles of the device. An operator subscription manager may retrieve device information from a manufacturer server, create an eSIM operating profile, assign an IMSI, and exchange such information with entities such as user equipment and EIR.

US2018/176768 describes a profile provisioning method of a terminal. The method includes transmitting a request message to a market server to request information on subscription plans offered by at least one operator, receiving a response message including the information on the subscription plans offered by the at least one operator from the market server, and displaying a subscription plan list based on the information on the subscription plans offered by the at least one operator, the subscription plan list presenting the subscription plans in an order of priority.

US2018/014178 describes a communication technique that combines a 5G communication system for supporting a data rate that is higher than that of a beyond 4G system with IoT technology, and a system thereof. The disclosure may be applied to intelligent services on the basis of 5G communication technology and IoT related technology, such as smart home, smart building, smart city, smart car or connected car, health care, digital education, retail, security and safety related services. Disclosed is a method for causing a cellular network itself to receive provisioning of a SIM profile to make it possible to use a normal cellular network service.

### BRIEF SUMMARY

The invention is defined in the independent claims. Embodiments of the invention are set out in the dependent claims. In an embodiment, an Internet gateway includes a receiver configured to receive, from a device, a request to provision an embedded subscriber identity module (eSIM) of the device. The Internet gateway includes a processor configured to in response to receiving the request to provision the eSIM of the device, cause the eSIM of the device to be provisioned with a profile. Provisioning the eSIM includes writing the profile to the eSIM. Provisioning the eSIM giving the device an ability to authenticate with a base station for communicating, via the base station, over a cellular communication protocol. The processor is configured to, after causing the eSIM to be provisioned, determine whether at least one criterion is met by evaluating communications between the device (102) and the Internet gateway (104) that occur after the provisioning of the eSIM, the at least one criterion being for retaining the ability of the device to authenticate with the base station or denying the device the ability to authenticate with the base station and in response to determining that the at least one criterion is met, output data indicating that the at least one criterion is met. The Internet gateway includes a transmitter configured to transmit the data indicating that the at least one criterion is met.

The Internet gateway is configured to provide Internet coverage using over a local area network (LAN) communication protocol and the receiver is configured to receive the request over the LAN communication protocol. In an embodiment, the LAN communication protocol is an Institute of Electrical and Electronics Engineers (IEEE) 802.11 communication protocol. In an embodiment, the device is configured to access the Internet via the Internet gateway and over the LAN communication protocol when the device is within a proximity of the Internet gateway.

In an embodiment, the data indicating that the at least one criterion is met is addressed to a server, and the server is configured to maintain a list of devices able to authenticate with the base station. In an embodiment, the server is configured to keep the device in the list of devices able to authenticate with the base station if the at least one criterion is for retaining the ability of the device to authenticate with the base station.

In an embodiment, the server is configured to remove the device from the list of devices able to authenticate with the base station if the at least one criterion is for denying the device the ability to authenticate with the base station. In an embodiment, the at least one criterion for retaining the ability of the device to authenticate with the base station is met when the device has communicated with the Internet gateway at least a minimum number of times in a preceding duration of time, or the at least one criterion for denying the device the ability to authenticate with the base station is met when the device has not communicated with the Internet gateway at least a minimum number of times in a preceding duration of time.

In an embodiment, the at least one criterion for retaining the ability of the device to authenticate with the base station is met when the device has communicated with the Internet gateway at least a minimum number of times during specified hours of the day in a preceding duration of time, or the at least one criterion for denying the device the ability to authenticate with the base station is met when the device has not communicated with the Internet gateway at least a minimum number of times during specified hours of the day in a preceding duration of time.

In an embodiment, a system includes an Internet gateway of any previously described embodiment and a server that includes memory configured to store a list of a plurality of devices able to authenticate with a base station. The list of the plurality of devices includes a first device. In an embodiment, the server includes a receiver configured to receive, from an Internet gateway, data indicating that at least one criterion for retaining the ability of the first device to authenticate with the base station or revoking the ability of the first device to authenticate with the base station is met. In an embodiment, the server includes a processor configured to in response to receiving the data indicating that at least one criterion for retaining the ability of the first device to authenticate with the base station is met, retain an inclusion of the first device in the list of the plurality of devices and permit authentication of the first device by the base station.

In an embodiment, the processor is configured to, in response to receiving the data indicating that at least one criterion for revoking the ability of the first device to authenticate with the base station is met, remove the first device from the list of the plurality of devices and deny authentication of the first device by the base station. In an embodiment, permitting authentication of the first device by the base station includes receiving a request, from the base station, inquiring whether the first device is to be authenticated, in response to receiving the request, determining that the first device is included in the list of the plurality of devices and sending a response to the base station indicating that the first device is to be authenticated by the base station.

In an embodiment, denying authentication of the first device by the base station includes receiving a request, from the base station, inquiring whether the first device is to be authenticated, in response to receiving the request, determining that the first device is not included in the list of the plurality of devices and sending a response to the base station indicating that the first device is not to be authenticated by the base station.

In an embodiment, the receiver is configured to receive, from the Internet gateway, a request to include the first device in the list. In an embodiment, the Internet gateway is configured to send the request in response to provisioning an embedded subscriber identity module (eSIM) of the first device due to a proximity of the first device to the Internet gateway.

In an embodiment, a method performed by an Internet gateway includes receiving a request to provision an embedded subscriber identity module (eSIM) of the device, and in response to receiving the request to provision the eSIM of the device, causing the eSIM of the device to be provisioned with a profile. Provisioning the eSIM includes writing the profile to the eSIM. Provisioning the eSIM gives the device an ability to authenticate with a base station for communicating, via the base station, over a cellular communication protocol. The method includes after causing the eSIM to be provisioned, determining whether at least one criterion is met, the at least one criterion being for retaining the ability of the device to authenticate with the base station or denying the device the ability to authenticate with the base station and in response to determining that the at least one criterion is met, sending data, to a server, indicating that the at least one criterion is met.

The method includes providing, by the Internet gateway, Internet coverage using over a local area network (LAN) communication protocol and receiving the request over the LAN communication protocol. In an embodiment, the LAN communication protocol is an Institute of Electrical and Electronics Engineers (IEEE) 802.11 communication protocol. In an embodiment, the method includes maintaining, by the server, a list of devices able to authenticate with the base station. In an embodiment, the method includes retaining, by the server, the device in the list of devices able to authenticate with the base station if the at least one criterion is for retaining the ability of the device to authenticate with the base station.

In an embodiment, the method includes removing, by the server, the device from the list of devices able to authenticate with the base station if the at least one criterion is for denying the device the ability to authenticate with the base station. In an embodiment, the at least one criterion for retaining the ability of the device to authenticate with the base station is met when the device has communicated with the Internet gateway at least a minimum number of times in a preceding duration of time, or the at least one criterion for denying the device the ability to authenticate with the base station is met when the device has not communicated with the Internet gateway at least a minimum number of times in a preceding duration of time.

In an embodiment, the at least one criterion for retaining the ability of the device to authenticate with the base station is met when the device has communicated with the Internet gateway at least a minimum number of times during specified hours of the day in a preceding duration of time, or the at least one criterion for denying the device the ability to authenticate with the base station is met when the device has not communicated with the Internet gateway at least a minimum number of times during specified hours of the day in a preceding duration of time.

### BRIEF DESCRIPTION OF THE SEVERAL VIEWS OF THE DRAWINGS

Figure 1 shows an environment for configuring an embedded subscriber identity module (eSIM) of a device.
Figure 2 shows a block diagram of the gateway.
Figure 3 shows a flow diagram of a method for provisioning an eSIM of a device.
Figure 4 shows a flow diagram of a method for updating a list of devices able to authenticate with a base station.

### DETAILED DESCRIPTION

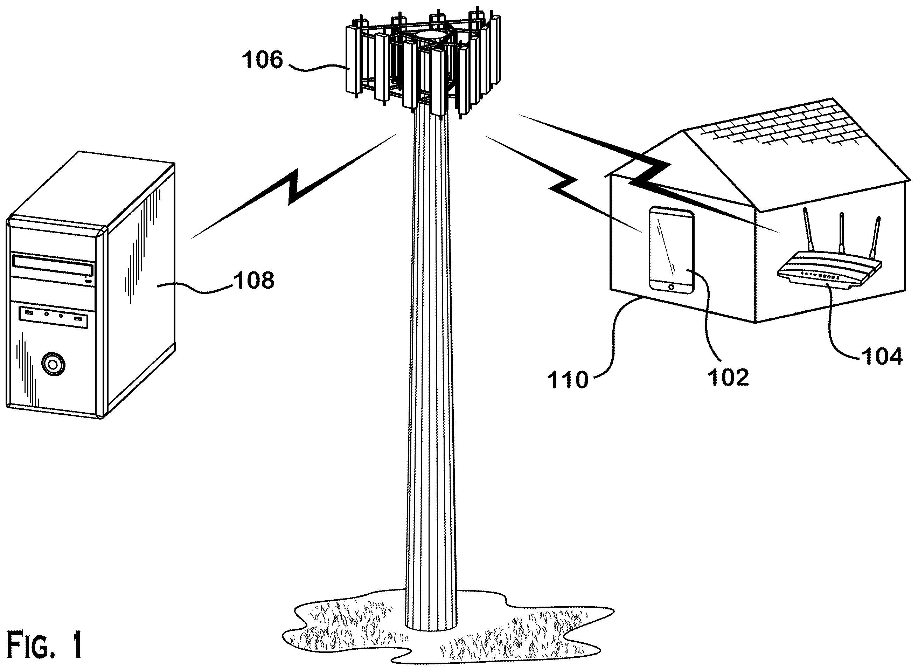

Figure 1 shows an environment 100 for configuring an embedded subscriber identity module (eSIM) of a device 102. The environment 100 has the device 102, a gateway 104, a base station 106 and a server 108. The device 102 may be any type of device, such as a consumer electronics device. For example, the device 102 may be a smartphone, a tablet, a smart watch or a laptop, among others. In addition, the device 102 may be an Internet of Things (IoT) device, such as a smart earphone, a smart meter or video surveillance devices, among others. The device 102 may be have eSIM (a SIM card or chip that is embedded directly therein). The eSIM is remotely (or "over the air") provisionable, for example, as provided in GSM Association Document SGP.22 RSP Technical Specification, Version 2.2.2, June 5, 2020. In addition to an initial subscription provisioning, subsequent changes from one operator to another may be made.

The gateway 104 may be any device configured to traffic data between the base station 106 and other devices, such as devices positioned in a proximity of the gateway 104 or the structure 110. The gateway 104 may provide Internet coverage for the devices positioned in the proximity of the gateway 104 or the structure 110. The gateway 104 may be configured to operate using two different communications protocols. The gateway 104 may be configured to communicate with the devices positioned in the proximity of the gateway 104 or the structure 110 over a local area network (LAN) communication protocol for providing local area networking and Internet access. The LAN communication protocol may be one of the Institute of Electrical and Electronics Engineers (IEEE) 802.11 family of standardized communication protocols (or Wi-Fi) or an Ethernet protocol, among others. The gateway 104 may be configured to communicate with the base station 106 over a fifth generation (5G) protocol of the 3rd Generation Partnership Project (3GPP). Thus, Internet data is transmitted from the devices via the gateway 104 to the base station 106 and from the base station 106 to other networking infrastructure (not shown) and vice-versa. The gateway 104 may, for example, be a modem or router acting as an intermediary or a hop between the base station 106 and another device. The gateway 104 may pass data traffic, filter the traffic, act as a proxy or perform protocol translation. The gateway 104 may have a firewall to block unwanted traffic or unauthorized devices from a closed network.

The base station 106 may be any device configured to provide cellular coverage for a geographic area, such as 5G coverage. The base station 106 may provide the coverage for various gateways, for example, used in subscriber's homes or businesses, as well as devices, such as the device 102, whether in the proximity of a gateway or not.

The server 108 may be any type of computing system managed by a provider of Internet services (for example, an Internet service provider (ISP)). The server 108 may have storage, such as a memory, configured to store a list of identifiers of eSIMs provisioned (for example, by the provider). The list may be a "white list" of identifiers of eSIMs, eSIM profiles or identifiers of eSIM profiles permitted by the provider to access the communication network (for example, 5G network) of the base station 106. If the device 102 has an eSIM eSIM profile or identifier of eSIM profile listed or identified on the list, the device 102 has access to the coverage provided by the base station 106. Conversely, the device 102 does not have access to the network.

The gateway 104, base station 106 and server 108 may be managed by the provider to provide connectivity to subscribers. The subscriber's devices may obtain access to the Internet or voice data by communicating with the gateway 104 when they are in a proximity of the gateway 104. Alternatively, the subscriber's devices may obtain the access by communicating with the base station 106 when they are not in a proximity of the gateway 104 or within the range of the gateway 104.

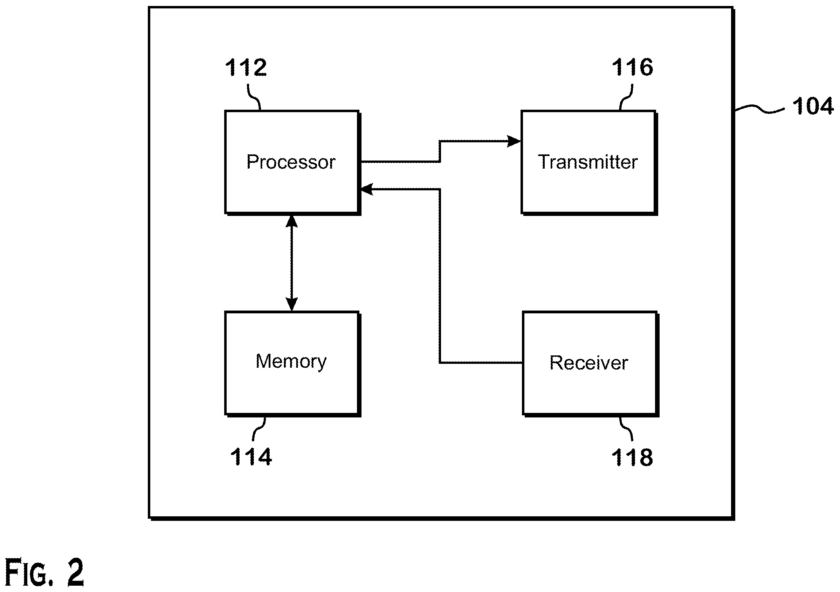

Figure 2 shows a block diagram of the gateway 104. The gateway 104 includes a processor 112, memory 114, a transmitter 116 and the receiver 118. The processor 112 may be any type of device that is configured to execute instructions (computer-executable instructions) that cause the processor 112 to operate as described herein. For example, the processor may be a controller or a microcontroller and may include a central processing unit (CPU) or any other type of processing unit. The memory 114 may be any type of non-transitory computer-readable storage medium. The memory 114 may be read-only memory (ROM) or random access memory (RAM), among others. Further, the memory 114 may be static or dynamic. The memory 114 stores the computer-executable instructions that may be retrieved or accessed by the processor 112 for execution. The computer-executable instructions, when executed by the processor 112, cause the processor 102 (and the gateway 104) to operate as described herein.

The transmitter 116 may be any type of device that is operable to transmit data to another device. The transmitter 116 may be configured to communicate using any type of communication protocol. The protocol may be a cellular communication protocol, such as long term evolution (LTE), or a wireless communication protocol, such as the Institute of Electrical and Electronics Engineers (IEEE) 802 protocol, among others. The gateway 104 may have two transmitters; a first transmitter configured to transmit data to the base station 106, for example, over a 5G communication protocol, and a second transmitter configured to transmit data to devices within the proximity of the gateway 104, for example, over an IEEE 802 protocol or Ethernet protocol, among others. Alternatively, a single transmitter may operate according to multiple protocols.

The receiver 118 may be any type of device that is operable to receive data from another device. Like the transmitter 116, the receiver 118 may be configured to communicate using any type of communication protocol. The gateway 104 may have two receivers; a first receiver configured to receive data from the base station 106, for example, over a 5G communication protocol, and a second receiver configured to receive data from devices within the proximity of the gateway 104, for example, over the IEEE 802 protocol or Ethernet protocol, among others. The device 102 and the server 108 may be similarly configured to the gateway 104.

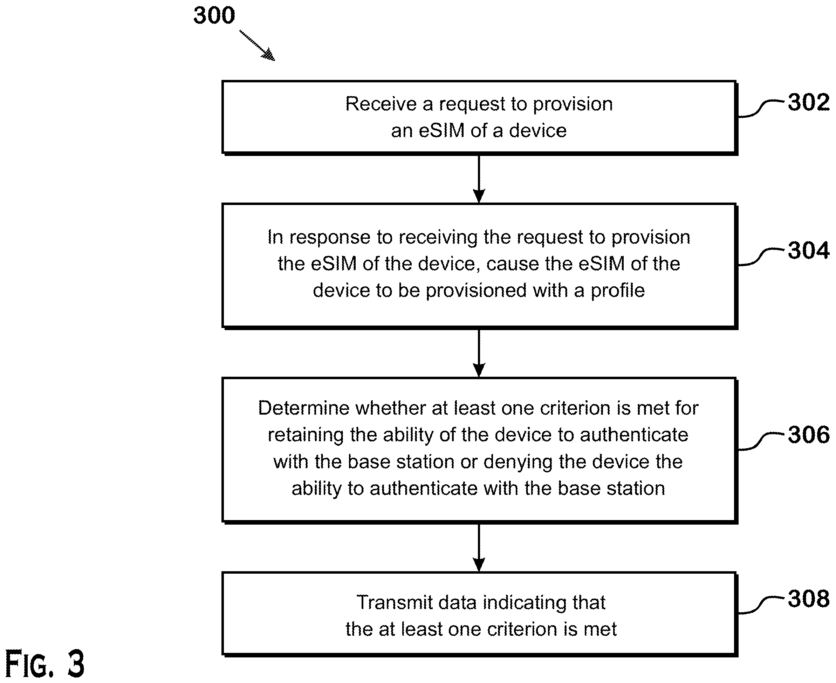

Figure 3 shows a flow diagram of a method 300 for provisioning an eSIM of a device. The method 300 also includes evaluating whether the device, such as the device 102, is qualified to continue communicating as provided by the provisioned eSIM (or evaluating whether the device should remain to be "whitelisted"). The method 300 includes, at 302, receiving, by an Internet gateway, such as the Internet gateway 104, a request to provision an eSIM of the device. As described herein, the device may be in a proximity of the Internet gateway. The device may belong to or be associated with a subscriber of Internet services provided by the Internet gateway. As part of the subscription, the subscriber may have devices thereof provisioned for base station-provided services, such as voice and/or internet services. The request may initiate a pairing procedure.

The Internet gateway, or a processor thereof, in response to receiving the request to provision the eSIM of the device, causes the eSIM of the device to be provisioned with a profile at 304. Provisioning the eSIM may include writing the profile (for example, the profile of the operator) to the eSIM. The profile may include a key, an integrated circuit card identifier (ICCID) and/or an international mobile subscriber identity (IMSI), among others. Provisioning the eSIM gives the device an ability to authenticate with a base station, such as the base station 106, for communicating, via the base station, over a cellular communication protocol. The device uses the profile and/or a key or identifier thereof to connect to the base station. Thus, if the device is not within (or is outside) the proximity of the Internet gateway, the device may receive data/voice services using the base station.

The device may not be provisioned indefinitely. It is sought to perform checks, for example, periodic or according to a set schedule, to determine whether the device remains associated with the subscriber. For example, if the device is used to communicate with the Internet gateway, the communication may be used as indicia that the device remains associated with a confirmed subscriber. Accordingly, the ability of the device to authenticate with the base station is retained. Conversely, the ability of the device to authenticate with the base station is reversed (e.g., by removing the device from a list of devices able to authenticate with the base station).

At 306, the Internet gateway determines whether at least one criterion is met for retaining the ability of the device to authenticate with the base station or denying the device the ability to authenticate with the base station. The at least one criterion for retaining the ability may be met when the device has communicated with the Internet gateway at least a minimum number of times in a preceding duration of time (for example, once, twice or three times in the last week, one month or two months). The at least one criterion for retaining the ability may be the fact that the device communicated ("checked in") with the Internet gateway. The at least one criterion for retaining the ability may be met in response to the device communicating with the Internet gateway.

The at least one criterion for denying the device the ability to authenticate with the base station may be met when the device has not communicated with the Internet gateway at least a minimum number of times in a preceding duration of time (for example, once, twice or three times in the last week, one month or two months).

In addition, the at least one criterion for retaining the ability of the device to authenticate with the base station may be met when the device has communicated with the Internet gateway at least a minimum number of times during specified hours of the day in a preceding duration of time (for example, once, twice or three times during the evening and early morning hours of 9p.m. to 9a.m. in the last week, one month or two months). Conversely, the at least one criterion for denying the device the ability to authenticate may be met when the device has not communicated with the Internet gateway at least a minimum number of times during specified hours of the day in a preceding duration of time. The Internet gateway identifies at a time associated with evaluating whether the at least one criterion is met. The time may be a timestamp at which the at least one criterion is evaluated or a time, day, week or month when the at least one criterion is evaluated. For example, if the device communicates with the Internet gateway, the criterion may be met and the time associated with evaluation of the criterion may be a time when the device communicated with the Internet gateway.

At 308, the Internet gateway, in response to determining that the at least one criterion is met, transmits data indicating that the at least one criterion is met. For example, the processor of the Internet gateway may output the data to the transmitter and the transmitter may transmit the data. The Internet gateway may send a time (or timestamp) associated with evaluating the at least one criterion. Thus, the server receiving the time may use the time as basis for extending or revoking device privileges. The Internet gateway may also send an identity of the device, such as an identity of profile, key, ICCID and/or an IMSI. Thus, the server may associate the at least one criterion and/or time with the device.

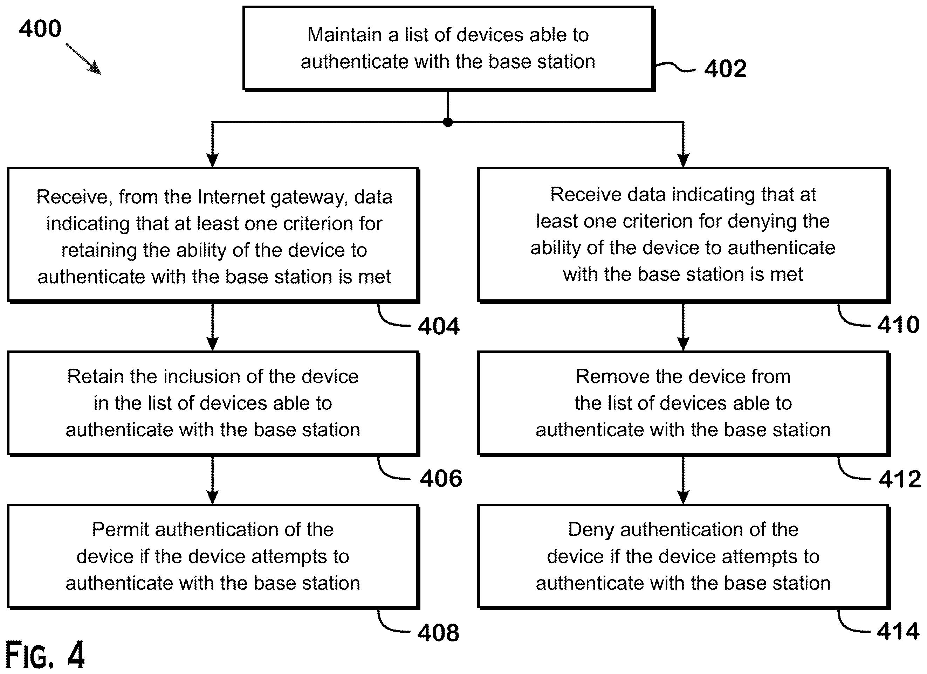

Figure 4 shows a flow diagram of a method 400 for updating a list of devices able to authenticate with a base station. In the method 400, a server, such as the server 108, maintains a list of devices able to authenticate with the base station at 402. The list may include an identity of the device, such as an IMEI of the device, a serial number of the device, an identifier of the eSIM of the device, or an identifier of the profile used to provision the eSIM, among others. The server may store the list in a memory of the server.

The server, at 404, receives, from the Internet gateway, data indicating that at least one criterion for retaining the ability of the device to authenticate with the base station is met. The data may include an identifier of the device. In response to receiving the data, the server, at 406, retains the inclusion of the device in the list of devices able to authenticate with the base station. The server, at 408, permits authentication of the device if the device attempts to authenticate with the base station (for communicating with the base station). Alternatively, in response to retaining the inclusion of the device in the list, at least the device is not denied authentication for lacking association with a recognized customer.

When the device attempts to communicate with the base station, the base station identifies the device (for example, using a handshake protocol). The base station then sends a request to the server inquiring as to whether the device is to be authenticated. The server determines whether the device (or an identifier thereof) is part of the list. If the device is part of the list, the server responds to the base station that the device is to be authenticated for communication with the base station and for services provided by the base station.

The server, at 410, receives, from the Internet gateway, data indicating that at least one criterion for denying the ability of the device to authenticate with the base station is met. The data may include an identifier of the device. In response to receiving the data, the server, at 412, removes the device (or an identifier thereof) from the list of devices able to authenticate with the base station or, alternatively, places the device on another list of devices having their privileges revoked. The server, at 414, denies authentication of the device if the device attempts to authenticate with the base station (for communicating with the base station). Alternatively, in response to removing the device, the device is denied authentication for lacking association with a recognized customer.

When the device attempts to communicate with the base station, the base station identifies the device (for example, using a handshake protocol). The base station then sends a request to the server inquiring as to whether the device is to be authenticated. The server determines whether the device (or an identifier thereof) is part of the list. If the device is not part of the list, the server responds to the base station that the device should not be authenticated for communication with the base station and for services provided by the base station. The base station denies communication services to the device.

The Internet gateway 104 may determine whether the at least one criterion for retaining the ability of the device to authenticate with the base station or denying the device the ability to authenticate with the base station is met periodically (for example, every week, one month or two months). Further, the Internet gateway 104 may determine whether the at least one criterion whenever the device is due for removal from the list of devices able to authenticate with the base station. For example, in response to determining that the at least one criterion for retaining the ability of the device to authenticate is met, the device may be retained on the list for a period of time (for example, two months). The device may be renewed for the period of time following the time and/or timestamp associated with the evaluation of the at least one criterion. When the period of time nears ending (for example, 80% or 90% of period of time elapses), the Internet gateway evaluates the at least one criterion. Thus, if the period of time is sixty days, the Internet gateway may evaluate the at least one criterion when forty eight days (80%) or fifty four days (90%) have elapsed since the last reevaluation of the at least one criterion. The evaluations informs whether the privileges associated with the earlier eSIM provisioning are to be maintained and/or extended. Thus, if the device is moved outside of the proximity (range) of the Internet gateway, communication automatically failover from the Internet gateway to the base station occurs.

## Claims

1. An Internet gateway (104), comprising:
a first receiver (118) configured to receive, from a device, a request to provision an embedded subscriber identity module, eSIM, of the device (102), wherein the Internet gateway (104) is configured to provide Internet coverage for the device (102) using a local area network, LAN, communication protocol and the first receiver (118) is configured to receive the request over the LAN communication protocol; and
a first processor (112) configured to:
in response to receiving the request to provision the eSIM of the device (102), cause the eSIM of the device to be provisioned with a profile by writing the profile to the eSIM, provisioning the eSIM giving the device an ability to authenticate with a base station (106) for communicating, via the base station (106), over a cellular communication protocol;
after causing the eSIM to be provisioned, determine whether at least one criterion is met by evaluating communications between the device (102) and the Internet gateway (104) that occur after the provisioning of the eSIM, the at least one criterion being for retaining the ability of the device (102) to authenticate with the base station (106) or denying the device (102) the ability to authenticate with the base station (106); and
in response to determining that the at least one criterion is met, output data indicating that the at least one criterion is met; and
a transmitter (114) configured to transmit the data indicating that the at least one criterion is met.

2. The Internet gateway of claim 1, wherein the LAN communication protocol is an Institute of Electrical and Electronics Engineers, IEEE, 802.11 communication protocol,
and optionally wherein:
the Internet gateway is configured to provide access to the Internet over the LAN communication protocol when the device is within a proximity of the Internet gateway.

3. The Internet gateway of either of claims 1 or 2, wherein the transmitter is configured to address the data indicating that the at least one criterion is met is addressed to a server for maintaining a list of devices able to authenticate with the base station,
and optionally wherein:
the transmitter is configured to transmit the data indicating that the at least one criterion for retaining the ability of the device to authenticate with the base station is met for inclusion of the device in the list of devices able to authenticate with the base station.

4. The Internet gateway of claim 3, wherein the transmitter is configured to transmit the data indicating that the at least one criterion for denying the device the ability to authenticate with the base station is met for removal of the device from the list of devices able to authenticate with the base station.

5. The Internet gateway of any of claims 1 to 4, wherein:
the at least one criterion for retaining the ability of the device to authenticate with the base station is met when the device has communicated with the Internet gateway at least a minimum number of times in a preceding duration of time, or
the at least one criterion for denying the device the ability to authenticate with the base station is met when the device has not communicated with the Internet gateway at least a minimum number of times in a preceding duration of time.

6. The Internet gateway of any of claims 1 to 4, wherein:
the at least one criterion for retaining the ability of the device to authenticate with the base station is met when the device has communicated with the Internet gateway at least a minimum number of times during specified hours of the day in a preceding duration of time, or
the at least one criterion for denying the device the ability to authenticate with the base station is met when the device has not communicated with the Internet gateway at least a minimum number of times during specified hours of the day in a preceding duration of time.

7. A system comprising the Internet gateway (104) of any preceding claim and a server (108), the server (108) comprising:
memory configured to store a list of a plurality of devices able to authenticate with a base station (106), the list of the plurality of devices including a first device (102);
a second receiver configured to receive, from the Internet gateway (104) that provides Internet coverage for the first device (102) using a local area network, LAN, communication protocol, the data indicating that at least one criterion for retaining the ability of the first device (102) to authenticate with the base station (106) or revoking the ability of the first device (102) to authenticate with the base station (106) is met; and
a second processor configured to:
in response to receiving the data indicating that at least one criterion for retaining the ability of the first device (102) to authenticate with the base station (106) is met,
retain an inclusion of the first device (102) in the list of the plurality of devices; and
permit authentication of the first device (102) by the base station (106); and
in response to receiving the data indicating that at least one criterion for revoking the ability of the first device (102) to authenticate with the base station (106) is met,
remove the first device (102) from the list of the plurality of devices; and
deny authentication of the first device (102) by the base station (106).

8. The system of claim 7, wherein permitting authentication of the first device by the base station includes:
receiving a request, from the base station, inquiring whether the first device is to be authenticated;
in response to receiving the request, determining that the first device is included in the list of the plurality of devices; and
sending a response to the base station indicating that the first device is to be authenticated by the base station.

9. The system of either claims 7 or 8, wherein denying authentication of the first device by the base station includes:
receiving a request, from the base station, inquiring whether the first device is to be authenticated;
in response to receiving the request, determining that the first device is not included in the list of the plurality of devices; and
sending a response to the base station indicating that the first device is not to be authenticated by the base station.

10. The system of any of claims 7 to 9, wherein the second receiver is configured to receive, from the Internet gateway, a request to include the first device in the list, wherein the Internet gateway is configured to send the request in response to provisioning an embedded subscriber identity module, eSIM, of the first device due to a proximity of the first device to the Internet gateway.

11. A method (300), comprising:
receiving (302), by an Internet gateway (104) from a device (102), a request to provision an embedded subscriber identity module, eSIM, of the device (102), wherein the Internet gateway (104) is configured to provide Internet coverage for the device (102) using a local area network, LAN, communication protocol and the request is received over the LAN communication protocol;
in response to receiving the request to provision the eSIM of the device (102), causing, by the Internet gateway (104), the eSIM of the device (102) to be provisioned with a profile by writing the profile to the eSIM, provisioning the eSIM giving the device (102) an ability to authenticate with a base station (106) for communicating, via the base station (106), over a cellular communication protocol;
after causing the eSIM to be provisioned, determining, by the Internet gateway (104), whether at least one criterion is met by evaluating communications between the device (102) and the Internet gateway (104) that occur after the provisioning of the eSIM, the at least one criterion being for retaining the ability of the device (102) to authenticate with the base station (106) or denying the device (102) the ability to authenticate with the base station (106); and
in response to determining that the at least one criterion is met, sending, by the Internet gateway (104), data, to a server (108), indicating that the at least one criterion is met.

12. The method of claim 11, comprising:
providing, by the Internet gateway, Internet coverage over a local area network, LAN, communication protocol; and
receiving, by the Internet gateway, the request over the LAN communication protocol,
and optionally wherein: the LAN communication protocol is an Institute of Electrical and Electronics Engineers, IEEE, 802.11 communication protocol.

13. The method of either claims 11 or 12, comprising:
maintaining, by the server, a list of devices able to authenticate with the base station,
and optionally wherein the method comprises:
retaining, by the server, the device in the list of devices able to authenticate with the base station if the at least one criterion is for retaining the ability of the device to authenticate with the base station,
and optionally wherein the method comprises:
removing, by the server, the device from the list of devices able to authenticate with the base station if the at least one criterion is for denying the device the ability to authenticate with the base station.

14. The method of any of claims 11 to 13, wherein:
the at least one criterion for retaining the ability of the device to authenticate with the base station is met when the device has communicated with the Internet gateway at least a minimum number of times in a preceding duration of time, or
the at least one criterion for denying the device the ability to authenticate with the base station is met when the device has not communicated with the Internet gateway at least a minimum number of times in a preceding duration of time.

15. The method of any of claims 11 to 13, wherein:
the at least one criterion for retaining the ability of the device to authenticate with the base station is met when the device has communicated with the Internet gateway at least a minimum number of times during specified hours of the day in a preceding duration of time, or
the at least one criterion for denying the device the ability to authenticate with the base station is met when the device has not communicated with the Internet gateway at least a minimum number of times during specified hours of the day in a preceding duration of time.

## Patentansprüche

1. Internet-Gateway (104), umfassend:
einen ersten Empfänger (118), der zum Empfangen, von einer Vorrichtung, einer Anforderung zur Provisionierung eines eingebetteten Teilnehmeridentitätsmoduls, eSIM, der Vorrichtung (102) konfiguriert ist, wobei das Internet-Gateway (104) zum Bereitstellen von Internetabdeckung für die Vorrichtung (102) unter Verwendung eines Local Area Network-, LAN, -Kommunikationsprotokolls konfiguriert ist und der erste Empfänger (118) zum Empfangen der Anforderung über das LAN-Kommunikationsprotokoll konfiguriert ist; und
einen ersten Prozessor (112), der konfiguriert ist zum:
Veranlassen, als Reaktion auf das Empfangen der Anforderung zur Provisionierung des eSIM der Vorrichtung (102), dass das eSIM der Vorrichtung mit einem Profil provisioniert wird, indem das Profil in das eSIM geschrieben wird, wobei die Provisionierung des eSIM der Vorrichtung der Vorrichtung die Fähigkeit verleiht, sich bei einer Basisstation (106) zum Kommunizieren, über die Basisstation (106), über ein Mobilfunk-Kommunikationsprotokoll zu authentifizieren;
Bestimmen, nach Veranlassen, dass das eSIM provisioniert wird, ob mindestens ein Kriterium erfüllt ist, indem die Kommunikation zwischen der Vorrichtung (102) und dem Internet-Gateway (104) ausgewertet wird, die nach der Provisionierung der eSIM stattfindet, wobei das mindestens eine Kriterium dafür ist, die Fähigkeit der Vorrichtung (102) zum Authentifizieren bei der Basisstation (106) aufrechtzuerhalten, oder dafür, der Vorrichtung (102) die Fähigkeit zum Authentifizieren bei der Basisstation (106) zu verweigern; und,
als Reaktion auf das Bestimmen, dass das mindestens eine Kriterium erfüllt ist, Ausgeben von Daten, die anzeigen, dass das mindestens eine Kriterium erfüllt ist; und
einen Sender (114), der zum Übertragen der Daten, die anzeigen, dass das mindestens eine Kriterium erfüllt ist, konfiguriert ist.

2. Internet-Gateway nach Anspruch 1, wobei das LAN-Kommunikationsprotokoll ein Institute of Electrical and Electronics Engineers, IEEE, 802.11-Kommunikationsprotokoll ist und wahlweise wobei:
das Internet-Gateway zum Bereitstellen von Zugang zum Internet über das LAN-Kommunikationsprotokoll, wenn sich die Vorrichtung in der Nähe des Internet-Gateways befindet, konfiguriert ist.

3. Internet-Gateway nach Anspruch 1 oder 2, wobei der Sender zum Adressieren der Daten, die anzeigen, dass das mindestens eine Kriterium erfüllt ist, an einen Server zum Verwalten einer Liste von Vorrichtungen, die sich bei der Basisstation authentifizieren können, konfiguriert ist,
und wahlweise wobei:
der Sender zum Übertragen der Daten, die anzeigen, dass das mindestens eine Kriterium für die Aufrechterhaltung der Fähigkeit der Vorrichtung, sich bei der Basisstation zu authentifizieren, erfüllt ist, zur Aufnahme der Vorrichtung in die Liste der Vorrichtungen, die sich bei der Basisstation authentifizieren können, konfiguriert ist.

4. Internet-Gateway nach Anspruch 3, wobei der Sender zum Übertragen der Daten, die anzeigen, dass das mindestens eine Kriterium dafür, der Vorrichtung die Fähigkeit zum Authentifizieren bei der Basisstation zu verweigern, erfüllt ist, zur Entfernung der Vorrichtung aus der Liste der Vorrichtungen, die sich bei der Basisstation authentifizieren können, konfiguriert ist.

5. Internet-Gateway nach einem der Ansprüche 1 bis 4, wobei:
das mindestens eine Kriterium für die Aufrechterhaltung der Fähigkeit der Vorrichtung, sich bei der Basisstation zu authentifizieren, erfüllt ist, wenn die Vorrichtung in einem vorangegangenen Zeitraum mindestens eine Mindestanzahl von Malen mit dem Internet-Gateway kommuniziert hat, oder
das mindestens eine Kriterium dafür, der Vorrichtung die Fähigkeit zum Authentifizieren bei der Basisstation zu verweigern, erfüllt ist, wenn die Vorrichtung in einem vorangegangenen Zeitraum nicht mindestens eine Mindestanzahl von Malen mit dem Internet-Gateway kommuniziert hat.

6. Internet-Gateway nach einem der Ansprüche 1 bis 4, wobei:
das mindestens eine Kriterium für die Aufrechterhaltung der Fähigkeit der Vorrichtung, sich bei der Basisstation zu authentifizieren, erfüllt ist, wenn die Vorrichtung während vorgegebener Stunden des Tages in einem vorangegangenen Zeitraum mindestens eine Mindestanzahl von Malen mit dem Internet-Gateway kommuniziert hat, oder
das mindestens eine Kriterium dafür, der Vorrichtung die Fähigkeit zum Authentifizieren bei der Basisstation zu verweigern, erfüllt ist, wenn die Vorrichtung während vorgegebener Stunden des Tages in einem vorangegangenen Zeitraum nicht mindestens eine Mindestanzahl von Malen mit dem Internet-Gateway kommuniziert hat.

7. System, umfassend das Internet-Gateway (104) nach einem der vorhergehenden Ansprüche und einen Server (108), wobei der Server (108) Folgendes umfasst:
Speicher, der zum Speichern einer Liste einer Mehrzahl von Vorrichtungen, die sich bei einer Basisstation (106) authentifizieren können, konfiguriert ist, wobei die Liste der Mehrzahl von Vorrichtungen eine erste Vorrichtung (102) beinhaltet;
einen zweiten Empfänger, der zum Empfangen, von dem Internet-Gateway (104), der Internetabdeckung für die erste Vorrichtung (102) unter Verwendung eines Local Area Network-, LAN, -Kommunikationsprotokolls bereitstellt, konfiguriert ist, wobei die Daten anzeigen, dass das mindestens eine Kriterium für die Aufrechterhaltung der Fähigkeit der ersten Vorrichtung (102), sich bei der Basisstation zu authentifizieren, oder für das Widerrufen der Fähigkeit der ersten Vorrichtung (102), sich bei der Basisstation zu authentifizieren, erfüllt ist; und
einen zweiten Prozessor, der konfiguriert ist zum:
als Reaktion auf das Empfangen der Daten, die anzeigen, dass das mindestens eine Kriterium für die Aufrechterhaltung der Fähigkeit der ersten Vorrichtung (102), sich bei der Basisstation (106) zu authentifizieren, erfüllt ist,
Aufrechterhalten einer Aufnahme der ersten Vorrichtung (102) in die Liste der Mehrzahl von Vorrichtungen; und
Zulassen der Authentifizierung der ersten Vorrichtung (102) durch die Basisstation (106); und
als Reaktion auf das Empfangen der Daten, die anzeigen, dass das mindestens eine Kriterium für das Widerrufen der Fähigkeit der ersten Vorrichtung (102), sich bei der Basisstation (106) zu authentifizieren, erfüllt ist,
Entfernen der ersten Vorrichtung (102) aus der Liste der Mehrzahl von Vorrichtungen; und
Verweigern der Authentifizierung der ersten Vorrichtung (102) durch die Basisstation (106).

8. System nach Anspruch 7, wobei das Zulassen der Authentifizierung der ersten Vorrichtung durch die Basisstation Folgendes beinhaltet:
Empfangen einer Anforderung von der Basisstation, die anfragt, ob die erste Vorrichtung zu authentifizieren ist;
als Reaktion auf das Empfangen der Anforderung, Bestimmen, dass die erste Vorrichtung in der Liste der Mehrzahl von Vorrichtungen aufgenommen ist; und
Senden einer Antwort an die Basisstation, die anzeigt, dass die erste Vorrichtung durch die Basisstation zu authentifizieren ist.

9. System nach Anspruch 7 oder 8, wobei das Verweigern der Authentifizierung der ersten Vorrichtung durch die Basisstation Folgendes beinhaltet:
Empfangen einer Anforderung von der Basisstation, die anfragt, ob die erste Vorrichtung zu authentifizieren ist;
als Reaktion auf das Empfangen der Anforderung, Bestimmen, dass die erste Vorrichtung nicht in der Liste der Mehrzahl von Vorrichtungen aufgenommen ist; und
Senden einer Antwort an die Basisstation, die anzeigt, dass die erste Vorrichtung nicht durch die Basisstation zu authentifizieren ist.

10. System nach einem der Ansprüche 7 bis 9, wobei der zweite Empfänger zum Empfangen, vom Internet-Gateway, einer Anforderung zum Aufnehmen der ersten Vorrichtung in die Liste konfiguriert ist, wobei das Internet-Gateway zum Senden der Anforderung als Reaktion auf die Provisionierung eines eingebetteten Teilnehmeridentitätsmoduls, eSIM, der ersten Vorrichtung aufgrund einer Nähe der ersten Vorrichtung zum Internet-Gateway konfiguriert ist.

11. Verfahren (300), umfassend:
Empfangen (302), durch ein Internet-Gateway (104) von einer Vorrichtung, einer Anforderung zur Provisionierung eines eingebetteten Teilnehmeridentitätsmoduls, eSIM, der Vorrichtung (102) konfiguriert ist, wobei das Internet-Gateway (104) zum Bereitstellen von Internetabdeckung für die Vorrichtung (102) unter Verwendung eines Local Area Network-, LAN, -Kommunikationsprotokolls konfiguriert ist und die Anforderung über das LAN-Kommunikationsprotokoll empfangen wird;
Veranlassen, durch das Internet-Gateway (104), als Reaktion auf das Empfangen der Anforderung zur Provisionierung des eSIM der Vorrichtung (102), dass das eSIM der Vorrichtung (102) mit einem Profil provisioniert wird, indem das Profil in das eSIM geschrieben wird, wobei die Provisionierung des eSIM der Vorrichtung (102) die Fähigkeit verleiht, sich bei einer Basisstation (106) zum Kommunizieren, über die Basisstation (106), über ein Mobilfunk-Kommunikationsprotokoll zu authentifizieren;
Bestimmen nach Veranlassen, dass das eSIM provisioniert wird, durch das Internet-Gateway, ob mindestens ein Kriterium erfüllt ist, indem die Kommunikation zwischen der Vorrichtung (102) und dem Internet-Gateway (104) ausgewertet wird, die nach der Provisionierung der eSIM stattfindet, wobei das mindestens eine Kriterium dafür ist, die Fähigkeit der Vorrichtung (102) zum Authentifizieren bei der Basisstation (106) aufrechtzuerhalten, oder dafür, der Vorrichtung (102) die Fähigkeit zum Authentifizieren bei der Basisstation (106) zu verweigern; und,
als Reaktion auf das Bestimmen, dass das mindestens eine Kriterium erfüllt ist, Senden, durch das Internet-Gateway (104), von Daten an einen Server (108), die anzeigen, dass das mindestens eine Kriterium erfüllt ist.

12. Verfahren nach Anspruch 11, umfassend:
Bereitstellen, durch das Internet-Gateway, von Internetabdeckung über ein Local Area Network-, LAN, -Kommunikationsprotokoll; und
Empfangen, durch das Internet-Gateway, der Anforderung über das LAN-Kommunikationsprotokoll,
und wahlweise wobei: das LAN-Kommunikationsprotokoll ein Institute of Electrical and Electronics Engineers, IEEE, 802.11-Kommunikationsprotokoll ist.

13. Verfahren nach Anspruch 11 oder 12, umfassend:
Verwalten einer Liste von Vorrichtungen durch einen Server, die sich bei der Basisstation authentifizieren können,
und, wahlweise, wobei das Verfahren Folgendes umfasst:
Behalten, durch den Server, der Vorrichtung in der Liste der Vorrichtungen, die sich bei der Basisstation authentifizieren können, wenn das mindestens eine Kriterium dafür ist, die Fähigkeit der Vorrichtung zum Authentifizieren bei der Basisstation aufrechtzuerhalten,
und, wahlweise, wobei das Verfahren Folgendes umfasst:
Entfernen, durch den Server, der Vorrichtung aus der Liste von Vorrichtungen, die sich bei der Basisstation authentifizieren können, wenn das mindestens eine Kriterium dafür ist, der Vorrichtung die Fähigkeit zum Authentifizieren bei der Basisstation zu verweigern.

14. Verfahren nach einem der Ansprüche 11 bis 13, wobei:
das mindestens eine Kriterium für die Aufrechterhaltung der Fähigkeit der Vorrichtung, sich bei der Basisstation zu authentifizieren, erfüllt ist, wenn die Vorrichtung in einem vorangegangenen Zeitraum mindestens eine Mindestanzahl von Malen mit dem Internet-Gateway kommuniziert hat, oder
das mindestens eine Kriterium dafür, der Vorrichtung die Fähigkeit zum Authentifizieren bei der Basisstation zu verweigern, erfüllt ist, wenn die Vorrichtung in einem vorangegangenen Zeitraum nicht mindestens eine Mindestanzahl von Malen mit dem Internet-Gateway kommuniziert hat.

15. Verfahren nach einem der Ansprüche 11 bis 13, wobei:
das mindestens eine Kriterium für die Aufrechterhaltung der Fähigkeit der Vorrichtung, sich bei der Basisstation zu authentifizieren, erfüllt ist, wenn die Vorrichtung während vorgegebener Stunden des Tages in einem vorangegangenen Zeitraum mindestens eine Mindestanzahl von Malen mit dem Internet-Gateway kommuniziert hat, oder
das mindestens eine Kriterium dafür, der Vorrichtung die Fähigkeit zum Authentifizieren bei der Basisstation zu verweigern, erfüllt ist, wenn die Vorrichtung während vorgegebener Stunden des Tages in einem vorangegangenen Zeitraum nicht mindestens eine Mindestanzahl von Malen mit dem Internet-Gateway kommuniziert hat.

## Revendications

1. Passerelle Internet (104) comprenant :
un premier récepteur (118) configuré pour recevoir, d'un dispositif, une requête de provisionnement de module d'identification d'abonné intégré, eSIM, du dispositif (102), où la passerelle Internet (104) est configurée pour fournir une couverture Internet pour le dispositif (102) en utilisant un protocole de communication de réseau local, LAN, et le premier récepteur (118) est configuré pour recevoir la requête sur le protocole de communication LAN ; et
un premier processeur (112) configuré pour :
en réponse à recevoir la requête de provisionnement de l'eSIM du dispositif (102), faire que l'eSIM du dispositif soit provisionné avec un profil en écrivant le profil à l'eSIM, provisionner l'eSIM donnant au dispositif l'aptitude à s'authentifier auprès d'une station de base (106) pour communiquer, via la station de base (106), sur un protocole de communication cellulaire ;
après avoir fait que l'eSIM soit provisionné, déterminer si un critère au moins est rempli en évaluant les communications entre le dispositif (102) et la passerelle Internet (104) qui surviennent après le provisionnement de l'eSIM, le au moins un critère étant de conserver l'aptitude du dispositif (102) à s'authentifier auprès de la station de base (106) ou de refuser au dispositif (102) l'aptitude de s'authentifier auprès de la station de base (106) ; et
en réponse à déterminer que le au moins un critère est rempli, sortir des données indiquant que le au moins un critère est rempli ; et
un émetteur (114) configuré pour transmettre les données indiquant que le au moins un critère est rempli.

2. Passerelle Internet selon la revendication 1, dans laquelle le protocole de communication LAN est un protocole de communication de l'Institut of Electrical and Electronics Engineers, IEEE, 802.11,
et optionnellement où :
la passerelle Internet est configurée pour donner l'accès à l'Internet sur le protocole de communication LAN lorsque le dispositif est à proximité de la passerelle Internet.

3. Passerelle Internet selon la revendication 1 ou 2, dans laquelle l'émetteur est configuré pour adresser les données indiquant que le au moins un critère est rempli sont adressées à un serveur pour tenir à jour une liste de dispositifs capables de s'authentifier auprès de la station de base,
et optionnellement dans laquelle :
l'émetteur est configuré pour transmettre les données indiquant que le au moins un critère pour conserver l'aptitude du dispositif à s'authentifier auprès de la station de base est rempli pour l'inclusion du dispositif dans la liste de dispositifs capables de s'authentifier auprès de la station de base.

4. Passerelle Internet selon la revendication 3, dans laquelle l'émetteur est configuré pour transmettre les données indiquant que le au moins un critère pour refuser au dispositif l'aptitude de s'authentifier auprès de la station de base est rempli pour la suppression du dispositif de la liste de dispositifs capables de s'authentifier auprès de la station de base.

5. Passerelle Internet selon l'une quelconque des revendications 1 à 4, dans laquelle :
le au moins un critère pour conserver l'aptitude du dispositif à s'authentifier auprès de la station de base est rempli lorsque le dispositif a communiqué avec la passerelle Internet au moins un nombre minimum de fois au cours d'une durée de temps précédente, ou
le au moins un critère pour refuser au dispositif l'aptitude à s'authentifier auprès de la station de base est rempli lorsque le dispositif n'a pas communiqué avec la passerelle Internet au moins un nombre minimum de fois au cours d'une durée de temps précédente.

6. Passerelle Internet selon l'une quelconque des revendications 1 à 4, dans laquelle :
le au moins un critère pour conserver l'aptitude du dispositif à s'authentifier auprès de la station de base est rempli lorsque le dispositif a communiqué avec la passerelle Internet au moins un nombre minimum de fois pendant des heures du jour spécifiées au cours d'une durée de temps précédente, ou
le au moins un critère pour refuser au dispositif l'aptitude à s'authentifier auprès de la station de base est rempli lorsque le dispositif n'a pas communiqué avec la passerelle Internet au moins un nombre minimum de fois pendant des heures du jour spécifiées au cours d'une durée de temps précédente.

7. Système comprenant la passerelle Internet (104) selon l'une quelconque des revendications précédentes et un serveur (108), le serveur (108) comprenant :
une mémoire configurée pour stocker une liste d'une pluralité de dispositifs capables de s'authentifier auprès d'une station de base (106), la liste de la pluralité de dispositifs comprenant un premier dispositif (102) ;
et un deuxième récepteur configuré pour recevoir, de la passerelle Internet (104) qui fournit la couverture Internet pour le premier dispositif (102), en utilisant un protocole de communication de réseau local, LAN, les données indiquant que le au moins un critère pour conserver l'aptitude du premier dispositif (102) à s'authentifier auprès de la station de base (06) ou révoquer l'aptitude du premier dispositif (102) à s'authentifier auprès de la station de base (106) est rempli ; et
un deuxième processeur configuré pour :
en réponse à la réception des données indiquant que le au moins un critère pour conserver l'aptitude du premier dispositif (102) à s'authentifier auprès de la station de base (106) est rempli,
conserver l'inclusion du premier dispositif (102) dans la liste de la pluralité de dispositifs ; et
permettre l'authentification du premier dispositif (102) par la station de base (106) ; et
en réponse à la réception des données indiquant que le au moins un critère pour révoquer l'aptitude du premier dispositif (102) à s'authentifier auprès de la station de base (106) est rempli,
supprimer le premier dispositif (102) de la liste de la pluralité de dispositifs ; et
refuser l'authentification du premier dispositif (102) par la station de base (106).

8. Système selon la revendication 7, dans lequel permettre l'authentification du premier dispositif par la station de base comprend :
recevoir une requête, de la station de base, demandant si le premier dispositif doit être authentifié ;
en réponse à recevoir la requête, déterminer que le premier dispositif est inclus dans la liste de la pluralité de dispositifs ; et
envoyer une réponse à la station de base indiquant que le premier dispositif doit être authentifié par la station de base.

9. Système selon la revendication 7 ou 8, dans lequel refuser l'authentification du premier dispositif par la station de base comprend :
recevoir une requête, de la station de base, demandant si le premier dispositif doit être authentifié ;
en réponse à la réception de la requête, déterminer que le premier dispositif n'est pas inclus dans la liste de la pluralité de dispositifs ; et
envoyer une réponse à la station de base indiquant que le premier dispositif ne doit pas être authentifié par la station de base.

10. Système selon l'une quelconque des revendications 7 à 9, dans lequel le deuxième récepteur est configuré pour recevoir, de la passerelle Internet, une requête d'inclure le premier dispositif dans la liste, dans lequel la passerelle Internet est configurée pour envoyer la requête en réponse au provisionnement d'un module d'identification d'abonné intégré, eSIM, du premier dispositif du fait de la proximité du premier dispositif à la passerelle Internet.

11. Procédé (300) comprenant :
recevoir (302), par une passerelle Internet (104) d'un dispositif (102), une requête de provisionnement de module d'identification d'abonné intégré, eSIM, du dispositif (102), dans lequel la passerelle Internet (104) est configurée pour fournir une couverture Internet pour le dispositif (102) en utilisant un protocole de communication de réseau local, LAN, et la requête est reçue sur le protocole de communication LAN ;
en réponse à recevoir la requête de provisionnement de l'eSIM du dispositif (102), faire, par la passerelle Internet (104), que l'eSIM du dispositif soit provisionné avec un profil en écrivant le profil à l'eSIM, provisionner l'eSIM donnant au dispositif l'aptitude à s'authentifier auprès d'une station de base (106) pour communiquer, via la station de base (106), sur un protocole de communication cellulaire ;
après avoir fait que l'eSIM soit provisionné, déterminer, par la passerelle Internet (104), si un critère au moins est rempli en évaluant les communications entre le dispositif (102) et la passerelle Internet (104) qui surviennent après le provisionnement de l'eSIM, le au moins un critère étant de conserver l'aptitude du dispositif (102) à s'authentifier auprès de la station de base (106) ou de refuser au dispositif (102) l'aptitude de s'authentifier auprès de la station de base (106) ; et
en réponse à déterminer que le au moins un critère est rempli, envoyer, par la passerelle Internet (104), des données à un serveur (108) indiquant que le au moins un critère est rempli.

12. Procédé selon la revendication 11, comprenant :
fournir, par la passerelle Internet, une couverture Internet sur un protocole de communication de réseau local, LAN ; et
recevoir, par la passerelle Internet, la requête sur le protocole de communication LAN,
et optionnellement dans lequel : le protocole de communication LAN est un protocole de communication de l'Institute of Electrical and Electronics Engineers, IEEE, 802.11.

13. Procédé selon la revendication 11 ou 12, comprenant :
tenir à jour, par le serveur, une liste de dispositifs capables de s'authentifier auprès de la station de base,
et optionnellement où le procédé comprend :
conserver, par le serveur, le dispositif dans la liste de dispositifs capables de s'authentifier auprès de la station de base si le au moins un critère est de conserver l'aptitude du dispositif à s'authentifier auprès de la station de base,
et optionnellement où le procédé comprend :
supprimer, par le serveur, le dispositif de la liste de dispositifs capables de s'authentifier auprès de la station de base si le au moins un critère est de refuser au dispositif l'aptitude de s'authentifier auprès de la station de base.

14. Procédé selon l'une quelconque des revendications 11 à 13, dans lequel :
le au moins un critère pour conserver l'aptitude du dispositif à s'authentifier auprès de la station de base est rempli lorsque le dispositif a communiqué avec la passerelle Internet au moins un nombre minimum de fois au cours d'une durée de temps précédente, ou
le au moins un critère pour refuser au dispositif l'aptitude à s'authentifier auprès de la station de base est rempli lorsque le dispositif n'a pas communiqué avec la passerelle Internet au moins un nombre minimum de fois au cours d'une durée de temps précédente.

15. Procédé selon l'une quelconque des revendications 11 à 13, dans lequel :
le au moins un critère pour conserver l'aptitude du dispositif à s'identifier avec la station de base est rempli lorsque le dispositif a communiqué avec la passerelle Internet au moins un nombre minimum de fois pendant des heures de la journée spécifiées au cours d'une durée de temps précédente, ou
le au moins un critère pour refuser au dispositif l'aptitude de s'authentifier auprès de la station de base est rempli lorsque le dispositif n'a pas communiqué avec la passerelle Internet au moins un nombre minimum de fois pendant des heures de la journée spécifiées au cours d'une durée de temps précédente.
